# EUROPÄISCHE PATENTSCHRIFT

(11) **EP 3 884 535 B1**
(45) Veröffentlichungstag und Bekanntmachung des Hinweises auf die Patenterteilung: **11.05.2022**
(21) Anmeldenummer: 20733226.3
(22) Anmeldetag: 10.06.2020
(51) Int. Cl.: H01M 8/0226, H01M 8/04119, H01M 8/0243, H01M 8/1018, H01M 8/0206, H01M 8/0213, H01M 8/0221, H01M 8/0228, H01M 8/0267

(54) **BRENNSTOFFZELLENPLATTE, BIPOLARPLATTE UND BRENNSTOFFZELLENVORRICHTUNG**
FUEL CELL PLATE, BIPOLAR PLATE AND FUEL CELL DEVICE
PLAQUE DE PILE À COMBUSTIBLE, PLAQUE BIPOLAIRE ET SYSTÈME DE PILE À COMBUSTIBLE

(30) Priorität: 03.07.2019 DE 102019209766
(43) Veröffentlichungstag der Anmeldung: 29.09.2021
(73) Patentinhaber: Audi AG, 85045 Ingolstadt (DE); VOLKSWAGEN AG, 38440 Wolfsburg (DE)
(72) Erfinder: LUCAS, Christian, 38108 Braunschweig (DE); STAECK, Rune, 38518 Gifhorn (DE)
(74) Vertreter: Hentrich Patent- & Rechtsanwälte PartG mbB
(86) Internationale Anmeldenummer: PCT/EP2020/066012
(87) Internationale Veröffentlichungsnummer: WO 2021/001122

(56) Entgegenhaltungen:
- EP-B1- 2 234 192
- DE-A1- 10 040 792
- DE-A1-102004 050 921
- DE-A1-102005 008 082
- DE-A1-102011 017 417
- DE-B4-112004 002 313
- DE-B4-112005 000 365
- KR-A- 20050 122 454
- US-A1- 2003 000 640

## Beschreibung

Die Erfindung betrifft eine Brennstoffzellenplatte zur Verteilung eines Reaktanten auf eine Elektrode oder eine Gasdiffusionslage einer Brennstoffzelle, mit einem Plattenkörper, in den mindestens ein, wenigstens einen Kanal umfassendes, Flussfeld eingearbeitet ist. Die Erfindung betrifft darüber hinaus eine Bipolarplatte, die zumindest eine solche Brennstoffzellenplatte umfasst, sowie eine Brennstoffzellenvorrichtung mit einer solchen Bipolarplatte.

Für eine effiziente Brennstoffzellenreaktion muss die Membran der Membranelektrodenanordnung hinreichend feucht gehalten werden, um den Protonentransport zu begünstigen. Andererseits entsteht bei der Brennstoffreaktion aber auch Wasser, das aus der Brennstoffzelle abgeführt werden muss. Bei niedrigen Leistungen der Brennstoffzelle kann sich Wasser in den feinen Strömungskanälen mithin im Flussfeld der Brennstoffzellenplatte ansammeln, das aufgrund der geringen Strömungsgeschwindigkeiten der Reaktionsgase nicht immer heraus gedrückt wird. Beim Abstellen der Brennstoffzelle kann es bei niedrigen Umgebungstemperaturen zum Gefrieren des Wassers kommen. Kondensierendes oder gefrierendes Wasser ist nicht nur für die gleichmäßige Prozessgasversorgung der Brennstoffzelle ein Problem, es fördert darüber hinaus auch die Korrosion der Brennstoffzellenplatten oder auch der diese umfassenden Bipolarplatten. Ein bekanntes Konzept, um diesem Problem zu begegnen, sieht die Aufbringung hydrophiler Beschichtungen auf die Brennstoffzellenplatte vor, wodurch der Kontaktwinkel von Wasser auf der Beschichtung stark verkleinert wird, sodass es zu einer Abflachung und großflächigen Verteilung von Wassertropfen und zur Ausbildung eines dünnen Wasserfilms in den Kanälen kommt, der diese nicht mehr für Prozessgase verstopft. In der US 2011/0014548 A1 ist beispielsweise ein Verfahren beschrieben, bei dem eine auf Carbon basierende Bipolarplatte funktionalisiert wird durch die kovalente Bindung mit einer hydrophilen Gruppe. In der US 2009/0214927 A1 wird eine Bipolarplatte mittels einer Atomlagenabscheidung mit einer Beschichtung versehen, die zu einem Kontaktwinkel von Wasser auf der Beschichtung von kleiner als 40 Grad führt, was der Bipolarplatte hydrophile Eigenschaften verleiht. Auch in der US 2007/0298309 A1 wird auf eine Bipolarplatte eine Beschichtung aufgetragen, die dieser hydrophile Eigenschaften verleiht. In allen drei vorgenannten Druckschriften ist die Beschichtung zudem ausgestaltet, Elektronen zu leiten, also elektrisch leitfähig zu sein. In der DE 10 2008 034 545 A1 wird ein anderes Konzept zur Verhinderung der Blockade der Kanäle vorgestellt, wobei die Kanäle mit einer vernetzten dreidimensionalen Struktur versehen wird, die eine entsprechende Porosität selbst aufweist und hydrophile Eigenschaften besitzt.

Es können Betriebsweisen der Brennstoffzellenvorrichtung oder der Brennstoffzelle auftreten, bei denen keine ausreichende Produktion von Flüssigwasser vorliegt, sodass die Brennstoffzelle zu trocken wird. Dies kann zu Leistungund Lebensdauereinschränkungen führen.

In der DE 11 2005 000 365 B4 wird eine Bipolarplatte einer Brennstoffzelle beschrieben, auf welcher eine Flüssigkeitsverteilungsschicht angeordnet ist, die damit hygroskopische Eigenschaften besitzt und eine Kapillaraktivität zur gleichmäßigen Verteilung von Flüssigkeit aufweist. Diese Schicht des Flüssigkeitsverteilungsmediums kann mit elektrisch leitenden Partikeln versetzt sein.

In der EP 2 234 192 B1 ist eine Bipolarplatte beschrieben, bei der eine Metallplatte mit einer Beschichtung versehen ist, die Kohlenstoffpartikel, eingebettet in eine Polymermatrix, besitzt.

In der US 2003 / 0 000 640 A1wird eine Bipolarplatte beschrieben, die aus zwei miteinander stoffschlüssig verbundenen Einzelplatten gebildet ist. Die darin beschriebene Platte besteht aus einem flexiblen Graphitblatt dem Keramikfasern beigemengt werden können.

In der KR 2005 0 122 454 A wird eine Bipolarplatte beschrieben, die aus einem Kompositmaterial aus Kohlenstoff und einem aushärtbaren Harz besteht. Als bevorzugte Variante enthält diese Bipolarplatte Zeolith, um eine Flüssigkeitsverteilung hervorzurufen.

Es ist daher die Aufgabe der vorliegenden Erfindung, eine Brennstoffzellenplatte, eine Bipolarplatte und eine Brennstoffzellenvorrichtung bereitzustellen, die eine gleichmäßigere oder homogene Befeuchtung innerhalb der Brennstoffzelle gewährleisten und die außerdem einer zuverlässigen elektrische Leitfähigkeit bieten.

Diese Aufgabe wird gelöst durch eine Brennstoffzellenplatte mit den Merkmalen des Anspruchs 1, durch eine Bipolarplatte mit den Merkmalen des Anspruchs 7 und durch eine Brennstoffzellenvorrichtung mit den Merkmalen des Anspruchs 10. Vorteilhafte Ausgestaltungen mit zweckmäßigen Weiterbildungen der Erfindung sind in den abhängigen Ansprüchen angegeben.

Die Brennstoffzellenplatte zeichnet sich insbesondere dadurch aus, dass ihr Plattenkörper sowohl hygroskopische als auch elektrisch leitfähige Eigenschaften aufweist.

In diesem Zusammenhang liegt also nicht lediglich eine Beschichtung mit hydrophilen Eigenschaften vor, sondern der Plattenkörper der Brennstoffzellenplatte ist als solcher hygroskopisch gebildet und kann somit Wasser aufnehmen, zeitweise speichern und homogen wieder in trockene Prozessgase abgeben. Oftmals ist auch erst an einem Stapelauslass eines Brennstoffzellenstapels hinreichend viel Wasser vorhanden, das dann durch das Material des Plattenkörpers aufgesaugt und auch an Bereiche stapeleintrittsseitig transportiert werden kann, wenn entsprechende Transportkräfte herrschen. Vorzugsweise weist dabei der Plattenkörper zudem eine Kapillaraktivität auf, um beispielsweise auch Wasser aus einem Wasserbecken gleichmäßig zu transportieren, insbesondere also von einem feuchten Austritt der Brennstoffzellenplatte oder einer Bipolarplatte zu ihrem trockenen Eintritt zu führen.

In diesem Zusammenhang hat es sich als sinnvoll erwiesen, wenn der Plattenkörper aus einem Kompositwerkstoff besteht, welcher wenigstens ein hygroskopisches Material und wenigstens ein elektrisch leitfähiges Material umfasst. Dies bietet den Vorteil, dass eine hinreichend gute elektrische Anbindung der Brennstoffzellen- oder Bipolarplatten gegeben ist, die üblicherweise notwendig ist, wenn die Brennstoffzellen in einem Brennstoffzellenstapel angeordnet sind.

Dabei ist die Möglichkeit eröffnet, dass der Plattenkörper aus einem Compound besteht, also aus einem Verbundwerkstoff mit einem Kunststoffanteil. Dieser Compound kann in geschäumter oder in gesinteter Form vorliegen, wobei er zudem Industrieruß umfasst, um dem Plattenkörper neben seiner hygroskopischen Eigenschaft zusätzlich eine elektrische Leitfähigkeit zu verleihen. Als Kunststoffe kommen beispielsweise Polyethylen oder Polypropylen in Betracht, denen Ruß zugegeben wurde. Ein derartiger Industrieruß umfassender, geschäumter oder gesinteter Compound bietet zudem den Vorteil eines sehr geringen Gewichts.

Einem Plattenkörper können jedoch auch dadurch hygroskopische und elektrisch leitfähige Eigenschaften verliehen sein, dass der Plattenkörper aus einem hygroskopischen und elektrischen leitfähigen Material besteht, welches aus einem porösen Metallschaum oder einem gesinterten Metall gebildet ist. Hierbei kommt beispielsweise der Einsatz von Edelstahl in Betracht. Damit ist der Vorteil verbunden, dass die Brennstoffzellenplatte aufgrund des eingesetzten Metallschaums oder des eingesetzten gesinterten Metalls eine sehr große Festigkeit und damit Stabilität aufweist, was insbesondere dann von Vorteil ist, wenn die Brennstoffzellenplatte mit einer großen Spannkraft in einem Brennstoffzellenstapel gepresst wird.

Als besonders einfach zu formendes und hygroskopische Eigenschaften aufweisendes Material hat sich Calciumsilikat erwiesen. Um diesem Material zusätzlich elektrische Leitfähigkeit zu verleihen, wird beim Pressen oder beim Formen des Plattenkörpers zusätzlich Graphit beigemischt. Somit entsteht also auch ein vorteilhafter Plattenkörper aus einem Kompositwerkstoff, welcher wenigstens ein hygroskopisches Material und wenigstens ein elektrisch leitfähiges Material umfasst.

Aufgrund des Plattenkörpers der Bipolarplatte mit hygroskopischen und elektrisch leitfähigen Eigenschaften ist es - zumindest zunächst - nicht möglich, diese Brennstoffzellenplatte in einer Bipolarplatte mit der Führung von Kühlmittel zu verwenden, da das Kühlmittel ansonsten durch das Material des Plattenkörpers hindurch an die Membranelektrodenanordnung der Brennstoffzelle gelangen könnte. Es besteht aber die Möglichkeit des Einsatzes von deionisiertem Wasser für die Kühlung der Brennstoffzelle, welches zudem eine aktive Befeuchtung der Membran begünstigt und zugleich Schädigungen aufgrund von wirkenden Spannungen unterbindet.

Um allerdings auch nicht-deionisiertes Wasser für die Kühlung der Brennstoffzelle einsetzen zu können, hat es sich als sinnvoll erwiesen, wenn das Flussfeld zumindest abschnittsweise, insbesondere kanalweise, mit einer elektrisch leitfähigen, aber für Kühlmittel undurchlässigen Beschichtung versehen ist. Insbesondere verfügen dabei mindestens einer oder mehrere der Kanäle des Flussfeldes über eine Wassersperre aufgrund dieser Beschichtung.

Alternativ oder ergänzend zur Beschichtung kann aber auch dem Flussfeld ein elektrisch leitfähiges, und für Kühlmittel undurchlässiges Trennelement, beispielsweise in Form eines Trennbleches zugeordnet sein, welches ausgebildet ist, ein im Flussfeld strömendes Kühlmittel im Flussfeld zurückzuhalten. Ein solches Trennelement kann beispielsweise aus Graphit oder aus einem Metall gebildet sein und unterschiedlichen Formgebungen, in Abhängigkeit des gewünschten Strömungsquerschnittes der Kanäle des Flussfeldes, unterliegen. Es besteht zudem die Möglichkeit, beim Einsatz einer Brennstoffzellenplatte in einer Bipolarplatte dieses Trennelement dazu zu nutzen, um ein erstes Kühlmittel, beispielsweise Wasser in einem ersten Teilbereich der Bipolarplatte strömen zu lassen und ein zweites Kühlmittel, dann aber deionisiertes Wasser, in einem zweiten Bereich der Brennstoffzellenplatte strömen zu lassen. Aufgrund dieser Aufteilung der Kühlmittelströmungen kann auch beispielsweise ein kleinerer Deionisationsfilter im Kühlkreislauf Verwendung finden, was die Komplexität beispielsweise beim Einsatz in einem Brennstoffzellenfahrzeug der Brennstoffzellenvorrichtung reduziert.

Die erfindungsgemäße Bipolarplatte umfasst eine erfindungsgemäße Brennstoffzellenplatte und weist ein erstes Flussfeld zur Verteilung eines ersten Reaktanten an einer ersten Seite der Bipolarplatte, ein zweites Flussfeld zur Verteilung eines zweiten Reaktanten an einer zweiten Seite der Bipolarplatte und ein zwischen der Brennstoffzellenplatte und einer weiteren Unipolarplatte ausgebildetes Kühlmittelflussfeld auf.

Die für die Brennstoffzellenplatte erläuterten Vorteile und vorteilhaften Ausgestaltungen gelten gleichermaßen für die eine solche Brennstoffzellenplatte umfassende Bipolarplatte. Die Bipolarplatte weist den Vorteil auf, dass diese selbst aufgrund des Plattenkörpers aus hygroskopischen und elektrisch leitfähigen Material Wasser(-tropfen) am Ende der Brennstoffzelle aufnehmen kann und damit eine Flutung der Brennstoffzelle oder einzelner Kanäle verhindert. Aufgrund des hygroskopischen Materialanteils kann das Wasser dann innerhalb der Bipolarplatte gespeichert werden und gleichmäßig, beispielsweise entlang der Kanäle verteilt werden. Die gespeicherte Flüssigkeit könnte dann in eine trockene Gasströmung abgegeben werden, beispielsweise dann, wenn die Brennstoffzellenvorrichtung bei einem entsprechenden Lastpunkt betrieben wird.

Ein besonders einfacher Aufbau lässt sich dadurch erreichen, dass die Unipolarplatte selbst aus einem Metall oder aus Graphit gebildet ist, sodass diese nicht die hygroskopischen Eigenschaften der Brennstoffzellenplatte aufweisen muss. Es hat sich dabei gezeigt, dass eine derartige Hybridbauweise, nämlich mit einer Brennstoffzellenplatte mit einem Plattenkörper mit hygroskopischen und elektrisch leitfähigen Eigenschaften und einer Unipolarplatte ohne die hygroskopischen Eigenschaften, ausreichend sein kann, um die erfindungsgemäße Aufgabe zu lösen.

Um allerdings eine noch gleichmäßigere Verteilung der Flüssigkeit über die Bipolarplatte erreichen zu können, hat es sich als sinnvoll erwiesen, wenn auch die Unipolarplatte als eine Brennstoffzellenplatte gebildet ist, deren Plattenkörper hygroskopische und elektrisch leitfähige Eigenschaften aufweist.

Die erfindungsgemäße Brennstoffzellenvorrichtung umfasst eine Membranelektrodenanordnung mit zwei, die Membranelektrodenanordnung zwischen sich einfassenden Bipolarplatten, wie sie vorstehend erläutert wurden. Die für die Brennstoffzellenplatte und Bipolarplatte beschriebenen Vorteile und vorteilhafte Ausgestaltungen gelten auch für die erfindungsgemäße Brennstoffzellenvorrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen, sowie anhand der Zeichnungen. Dabei zeigen:
- Fig. 1: eine schematische Schnittansicht durch eine Brennstoffzellenvorrichtung mit zwei Bipolarplatten, deren einzelnen Halbplatten jeweils mit einem Plattenkörper aus hygroskopischen und elektrisch leitfähigen Material gebildet ist,
- Fig. 2: eine der Figur 1 entsprechende Darstellung mit Trennelement,
- Fig. 3: eine der Figur 2 entsprechende Darstellung mit anderer Gestaltung des Trennelements,
- Fig. 4: eine der Figur 2 entsprechende Darstellung mit unterschiedlichen Brennstoffzellen- und Unipolarplatten,
- Fig. 5: ein weiteres Ausführungsbeispiel entsprechend der Darstellung der Figur 1,
- Fig. 6: ein weiteres Ausführungsbeispiel einer Brennstoffzellenvorrichtung, und
- Fig. 7: einen Brennstoffzellenstapel aus mehreren Bipolarplatten und Membranelektrodenanordnungen.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membranelektrodenanordnung 2 (MEA), die ein Verbund aus einer Ionen leitenden, insbesondere Protonen leitenden Membran und jeweils einer beidseitig an der Membran angeordneten Elektrode (Anode und Kathode) ist. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation unter Abgabe von Elektronen stattfindet (H₂ →2H⁺ + 2e⁻). Über die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen e⁻ werden über eine elektrische Leitung der Kathode zugeleitet. Der Kathode wird Sauerstoff oder ein sauerstoffhaltiges Gasgemisch zugeführt, sodass eine Reduktion des Sauerstoffs unter Aufnahme der Elektronen stattfindet (½O₂ + 2e⁻ →O⁻²). Gleichzeitig reagieren im Kathodenraum diese Sauerstoffanionen mit den über die Membran transportierten Protonen unter Bildung von Wasser (2H⁺ + O²⁻ → H₂O).

In der Regel wird die Brennstoffzelle durch eine Vielzahl im Stapel (stack) angeordneter Membranelektrodenanordnungen 2 gebildet, deren elektrische Leistungen sich addieren. Zwischen zwei der Membranelektrodenanordnungen 2 ist in einem Brennstoffzellenstapel jeweils eine Bipolarplatte 3 angeordnet, die einerseits der Zuführung der Prozessgase zu der Anode beziehungsweise Kathode der benachbarten Membranelektrodenanordnung dient sowie der Abführung von Wärme. Bipolarplatten 3 bestehen zudem aus einem elektrisch leitfähigen Material, um die elektrische Verbindung herzustellen. Sie weisen somit die dreifache Funktion der Prozessgasversorgung der Membran-Elektroden-Einheiten, der Kühlung sowie der elektrischen Anbindung auf. Die Bipolarplatten 3 werden aus fertigungstechnischen Gründen zumeist aus zwei einzelnen Platten hergestellt, die miteinander verpresst und ggfs. verbunden, zumeist gefügt oder miteinander verklebt sind.

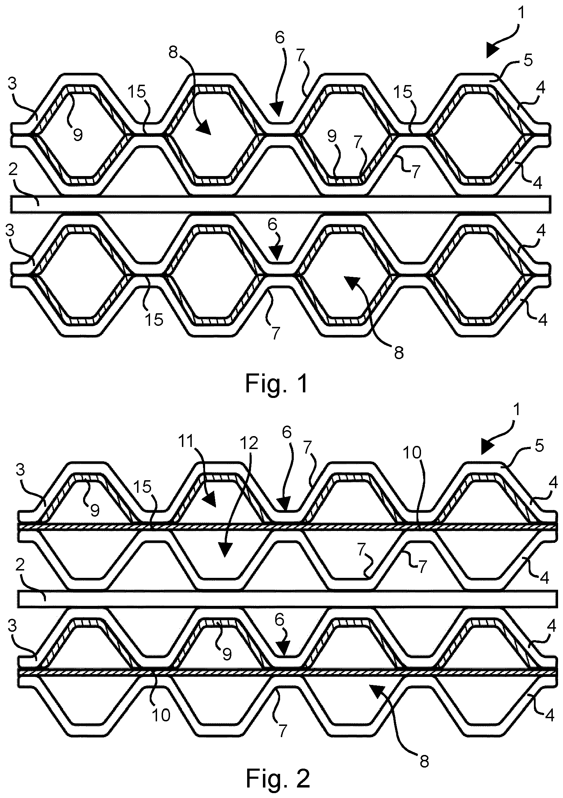

In Figur 1 ist eine Brennstoffzellenvorrichtung 1 in Schnittansicht gezeigt, wobei die Membranelektrodenanordnung 2 hier zwischen zwei einzelnen Bipolarplatten 3 eingefasst ist. Die Bipolarplatten 3 umfassen jeweils mindestens eine Brennstoffzellenplatte 4 zur Verteilung eines Reaktanten auf eine der Elektroden der Membranelektrodenanordnung 2. In ihrem Plattenkörper 5 ist ein Flussfeld 6 eingearbeitet, welches wenigstens einen Kanal 7 oder eine Vielzahl von Kanälen 7 aufweist. Der Plattenkörper 5 selbst weist hygroskopische und elektrisch leitfähige Eigenschaften auf. Er besteht vorliegend aus einem Kompositwerkstoff, welcher wenigstens ein hygroskopisches Material und wenigstens ein elektrisch leitfähiges Material umfasst. Als hygroskopisches Material hat sich der Einsatz von Calciumsilikat als vorteilhaft erwiesen, dem Graphit beigemischt ist, um eine elektrische Leitfähigkeit sicherzustellen. Der Plattenkörper 5 ist mithin also hygroskopisch und elektrisch leitfähig, vorzugsweise zusätzlich sogar kapillaraktiv, um flüssiges Wasser aufzusaugen. Er verteilt das flüssige Wasser homogen und gleichmäßig auf den Plattenkörper 5, sodass es auch homogen und gleichmäßig wieder in eine trockene Prozessgasströmung abgegeben werden kann, um einerseits ein Fluten der Brennstoffzellen zu verhindern und andererseits eine gleichmäßigere Befeuchtung der Membran der Membranelektrodenanordnung 2 herbeizuführen. Aufgrund der hygroskopischen und elektrisch leitfähigen Eigenschaften des Plattenkörpers 5 der einzelnen Brennstoffzellenplatten 4 besteht grundsätzlich die Möglichkeit, dass ein zwischen zwei der Brennstoffzellenplatten 4 ausgebildetes Kühlmittelflussfeld 8 Kühlmittel führt, welches an die Membranelektrodenanordnung 2 gelangen könnte. Um dies zu verhindern, ist in der Ausgestaltung nach Figur 1 das Flussfeld 6 vollständig mit einer elektrisch leitfähigen, aber für Kühlmittel undurchlässigen Beschichtung 9 versehen. Hierzu kann die Beschichtung 9 aus Graphit bestehen oder ein solches umfassen. Außerdem könnte eine metallische Beschichtung 9 in Betracht kommen. Die Beschichtung 9 gewährleistet, dass keine Ladungen durch das Kühlmittel an die Elektroden der Brennstoffzelle gelangen, die dort unerwünschte Spannungsveränderungen hervorrufen könnten. Die in Figur 1 gezeigten Bipolarplatten 3 sind aus zwei einzelnen Brennstoffzellenplatten 4 zusammengesetzt, wobei ihre Stege fluchtend zueinander ausgerichtet sind, um die Kühlmittelkanäle zwischen sich auszubilden. Ein weiteres Flussfeld 6 auf der den Kühlmittelkanälen abgewandten Seite der beiden Brennstoffzellenplatten 4 dient dann der Versorgung und Verteilung von Reaktanten auf die Elektroden der jeweils benachbarten Membranelektrodenanordnung 2. Die einzelnen Brennstoffzellenplatten 4 der jeweiligen Bipolarplatte 3 sind durch geeignete Kontakte 15 elektrisch miteinander gekoppelt.

In Figur 2 sind weitere Bipolarplatten 3 zu erkennen, die ebenfalls aus zwei der Brennstoffzellenplatten 4 mit einem Plattenkörper 5 aus hygroskopischem und elektrisch leitfähigem Material gebildet sind. Hierbei ist jedoch nur eine der beiden einzelnen Brennstoffzellenplatten 4 mit einer elektrisch leitfähigen, aber für Kühlmittel undurchlässigen Beschichtung 9 versehen. Die zweite Brennstoffzellenplatte 4 der Bipolarplatte 3 ist demgegenüber beschichtungsfrei gestaltet. Aufgrund des Plattenkörpers 5 mit hygroskopischen und elektrisch leitfähigen Eigenschaften der beschichtungsfreien Brennstoffzellenplatte ist zu gewährleisten, dass keine Ionen an die Membranelektrodenanordnung 2 gelangen. Dies führt dazu, dass die Kühlmittelkanäle vorliegend aufgeteilt oder getrennt werden, durch ein für Kühlmittel undurchlässiges Trennelement 10, welches ausgebildet ist, ein im Kühlmittelflussfeld 8 der mit einer Beschichtung 9 versehenen Brennstoffzellenplatte 4 strömendes Kühlmittel in diesem Flussfeld zurückzuhalten. Vorliegend ist das Trennelement 10 als ein Trennblech gebildet, welches Graphit oder Metall umfasst oder aus diesem besteht. In dem anderen Teil des Kühlmittelkanals kann aber dennoch ein Kühlmittel, beispielsweise in Form von deionisiertem Wasser strömen, um eine entsprechende Kühlung herbeizuführen. Es ist jedoch darauf zu achten, dass zwei verschiedene Kühlmittelkreisläufe, nämlich ein erster Kühlkreislauf 11 für normales, nicht unbedingt deionisiertes Kühlmittel und ein zweiter Kühlkreislauf 12 für ein deionisiertes Kühlmittel vorliegen. Beide Kreise können aber auch gemeinsam aneinander angeschlossen werden, wobei dann entsprechende Deionisationsfilter oder Deionisationsvorrichtungen mit entsprechenden Membranen zur Filterung der Ionen Einsatz finden.

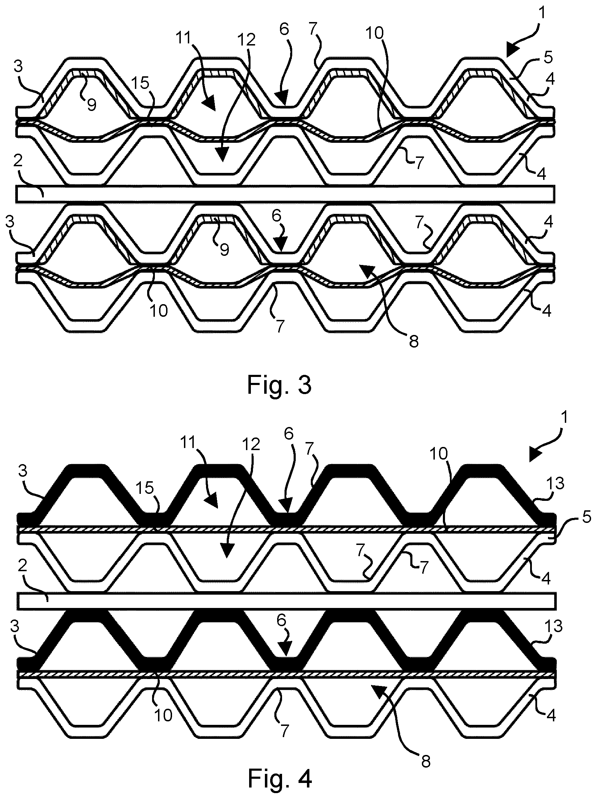

Anhand von Figur 3 ist zu erkennen, dass das Trennelement 10 auch unterschiedlichen Formgebungen unterliegen kann, sodass die Strömungsquerschnitte für ein deionisiertes Kühlmittel und für ein nicht deionisiertes Kühlmittel durch die Formgebung des Trennelementes 10 angepasst werden kann.

In Figur 4 ist eine weitere Ausgestaltung einer Brennstoffzellenvorrichtung 1 zu erkennen, die einerseits eine Brennstoffzellenplatte 4 mit einem Plattenkörper aus hygroskopischen und elektrisch leitfähigen Material und eine zweite Unipolarplatte 13 aus einem Plattenkörper mit lediglich elektrisch leitfähigen Eigenschaften, nicht aber hygroskopischen Eigenschaften umfasst. Diese Unipolarplatte 13 ist beispielsweise aus einem Metall oder aus Graphit gebildet oder umfasst zumindest ein solches. Auch hier ist ein Trennelement 12 vorhanden, um die Strömungskanäle für Kühlmittel zu unterteilen in einen ersten Anteil, in welchem normales, nicht deionisiertes Kühlmittel strömt und ein zweiten Anteil, in welchem deionisiertes Kühlmittel Einsatz findet.

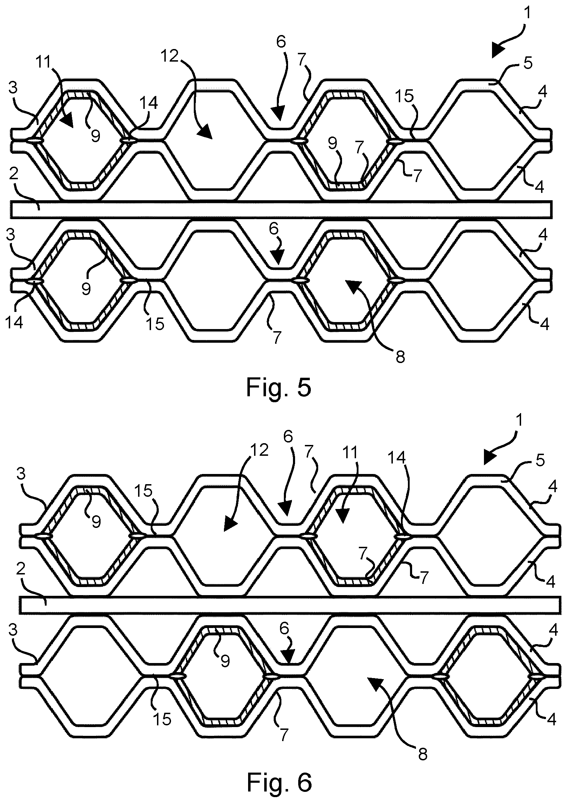

In Figur 5 ist eine weitere Brennstoffzellenvorrichtung 1 zu erkennen, die wiederum eine Bipolarplatte 3 aufweist, die aus zwei Brennstoffzellenplatten 4 mit einem Plattenkörper 5 aus hygroskopischem und elektrisch leitfähigem Material gebildet sind. Hierbei sind allerdings nur einzelne Kanäle mit einer Beschichtung 9 aus einem elektrisch leitfähigen, aber für Kühlmittel undurchlässigen Material versehen. In diesen Strömungskanälen kann also ein Kühlmittel fließen, das nicht extra deionisiert werden muss. In den anderen, unbeschichteten Strömungskanälen kann dann wieder ein deionisiertes Kühlmittel, beispielsweise deionisiertes Wasser strömen, um eine Kühlung und zusätzliche Befeuchtung der Membran hervorzurufen. Um eine zusätzliche Absicherung zu schaffen, dass kein nicht- deionisiertes Kühlmittel das Material des hygroskopischen und elektrisch leitfähigen Plattenkörpers 5 berührt, kann die Dichtheit zusätzlich durch entsprechende Dichtungselemente 14, beispielsweise einem Klebstoff, der an Kanalseite der Verbindungsstelle der beiden Halbplatten der Bipolarplatten 3 angebracht ist, Einsatz finden. In dem gezeigten Ausführungsbeispiel ist das Kühlmittelflussfeld derart ausgebildet, dass die Strömungskanäle mit Beschichtung 9 alternierend zu den Strömungskanälen ohne Beschichtung angeordnet sind. Zudem fluchten die Kanäle 7 mit Beschichtung und die Kanäle 7 ohne Beschichtung jeweils mit denjenigen einer auf der anderen Seite der Membranelektrodenanordnung 2 liegenden Bipolarplatte 3.

In Figur 6 ist eine andere Konfiguration zu sehen, bei der die beschichteten Strömungskanäle der oberen Bipolarplatte 3 mit unbeschichteten Strömungskanälen der unteren Bipolarplatte 3 fluchten und umgekehrt. Auch hier ist eine alternierende Anordnung der beschichteten Strömungskanäle und der unbeschichteten Strömungskanäle zu erkennen.

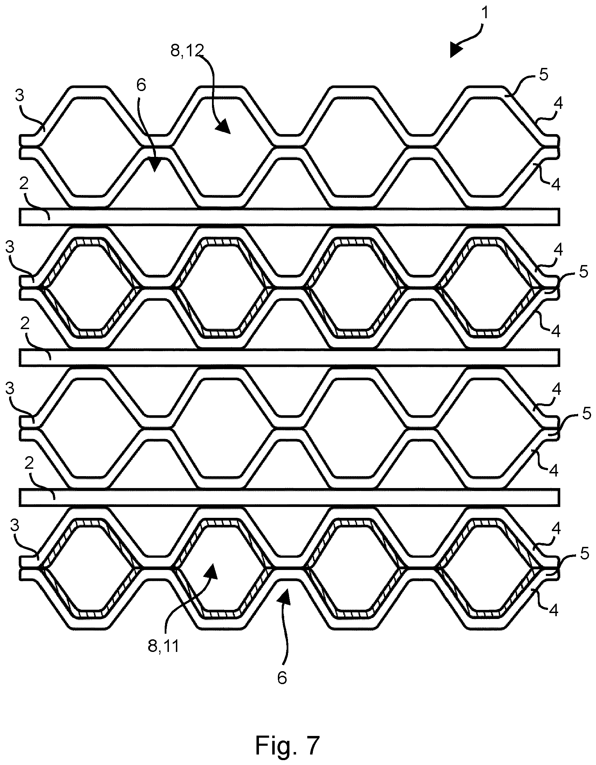

Abschließend ist in Figur 7 eine Brennstoffzellenvorrichtung 1 mit einer Mehrzahl von Membranelektrodenanordnungen 2 zu erkennen, wobei diese Membranelektrodenanordnungen 2 auf ihrer ersten Seite eine Bipolarplatte 3 mit den unbeschichteten Flussfeldern 6 und auf ihrer zweiten Seite eine Bipolarplatte 3 mit beschichteten Flussfeldern 6 aufweist. Die Beschichtung 9 ist derart ausgebildet, dass sie die Strömungskanäle der Kühlmittelführungen abdichten.

Im Ergebnis zeichnet sich die vorliegende Erfindung also durch ein verbessertes Wassermanagement für eine Brennstoffzellenvorrichtung 1 aus aufgrund des Einsatzes eines Plattenkörpers 5, der hygroskopische und elektrisch leitfähige Eigenschaften aufweist.

### BEZUGSZEICHENLISTE:

- 1.: Brennstoffzellenvorrichtung
- 2.: Membranelektrodenanordnung
- 3.: Bipolarplatte
- 4.: Brennstoffzellenplatte
- 5.: Plattenkörper
- 6.: Flussfeld
- 7.: Kanal
- 8.: Kühlmittelflussfeld
- 9.: Beschichtung
- 10.: Trennelement
- 11.: Kühlkreislauf (nicht unbedingt deionisiertes Kühlmittel)
- 12.: Kühlkreislauf (deionisiertes Kühlmittel)
- 13.: Unipolarplatte
- 14.: Dichtungselement
- 15.: Kontakt

## Patentansprüche

1. Brennstoffzellenplatte (1) zur Verteilung eines Reaktanten auf eine Elektrode oder eine Gasdiffusionslage einer Brennstoffzelle, mit einem Plattenkörper (5), in den mindestens ein, wenigstens einen Kanal (7) umfassendes, Flussfeld (6) eingearbeitet ist, wobei der Plattenkörper (5) hygroskopische und elektrisch leitfähige Eigenschaften aufweist, **dadurch gekennzeichnet, dass** der Plattenkörper (5) aus Calciumsilikat geformt ist, und dass dem Calciumsilikat Graphit beigemischt ist.

2. Brennstoffzellenplatte (1) nach Anspruch 1, **dadurch gekennzeichnet, dass** der Plattenkörper (5) aus einem Kompositwerkstoff besteht, welcher wenigstens ein hygroskopisches Material und wenigstens ein elektrisch leitfähiges Material umfasst.

3. Brennstoffzellenplatte (1) nach Anspruch 1 oder 2, **dadurch gekennzeichnet, dass** das Flußfeld (6) zumindest abschnittsweise, mit einer elektrisch leitfähigen, und für Kühlmittel undurchlässigen Beschichtung (9) versehen ist.

4. Brennstoffzellenplatte (1) nach einem der Ansprüche 1 bis 3, **dadurch gekennzeichnet, dass** dem Flussfeld (6) ein elektrisch leitfähiges, und für Kühlmittel undurchlässiges Trennelement (10) zugeordnet ist, welches ausgebildet ist, ein im Flussfeld (6) strömendes Kühlmittel im Flussfeld (6) zurückzuhalten.

5. Bipolarplatte (3) mit einer Brennstoffzellenplatte (1) nach einem der Ansprüche 1 bis 4, umfassend
ein erstes Flussfeld (6) zur Verteilung eines ersten Reaktanten an einer ersten Seite der Bipolarplatte (3),
ein zweites Flussfeld (6) zur Verteilung eines zweiten Reaktanten an einer zweiten Seite der Bipolarplatte (3), und
ein zwischen der Brennstoffzellenplatte (1) und einer weiteren Unipolarplatte (13) ausgebildetes Kühlmittelflussfeld (8).

6. Bipolarplatte (3) nach Anspruch 5, **dadurch gekennzeichnet, dass** die Unipolarplatte (13) aus einem Metall oder aus Graphit gebildet ist.

7. Bipolarplatte (3) nach Anspruch 5, **dadurch gekennzeichnet, dass** auch die Unipolarplatte (13) als eine Brennstoffzellenplatte (1) nach einem der Ansprüche 1 bis 4 gebildet ist.

8. Brennstoffzellenvorrichtung (1) mit einer Membranelektrodenanordnung (2) und mit zwei die Membranelektrodenanordnung (2) zwischen sich einfassenden Bipolarplatten (3) nach einem der Ansprüche 5 bis 7.

## Claims

1. A fuel cell plate (1) for distributing a reactant to an electrode or a gas diffusion layer of a fuel cell, having a plate body (5) in which at least one flow field (6) is incorporated, comprising at least one channel (7), wherein the plate body (5) comprises hygroscopic and electrically conductive properties, **characterized in that** the plate body (5) is formed from calcium silicate, and **in that** graphite is admixed with the calcium silicate.

2. The fuel cell plate (1) according to claim 1, **characterized in that** the plate body (5) consists of a composite material, comprising at least one hygroscopic material and at least one electrically conductive material.

3. The fuel cell plate (1) according to claim 1 or 2, **characterized in that** the flow field (6) is provided, at least for a portion, with an electrically conductive coating (9) impervious to coolants.

4. The fuel cell plate (1) according to any one of claims 1 to 3, **characterized in that** the flow field (6) is associated with an electrically conductive separating element (10), impervious to coolant, which is designed to retain in the flow field (6) a coolant flowing in the flow field (6).

5. A bipolar plate (3) with a fuel cell plate (1) according to any one of claims 1 to 4, comprising
a first flow field (6) for distributing a first reactant on a first side of the bipolar plate (3),
a second flow field (6) for distributing a second reactant on a second side of the bipolar plate (3), and
a coolant flow field (8) formed between the fuel cell plate (1) and an additional unipolar plate (13).

6. The bipolar plate (3) according to claim 5, **characterized in that** the unipolar plate (13) is formed of a metal or of graphite.

7. The bipolar plate (3) according to claim 5, **characterized in that** the unipolar plate (13) is also formed as a fuel cell plate (1) according to one of claims 1 to 4.

8. A fuel cell device (1) having a membrane electrode assembly (2) and having two bipolar plates (3) according to any one of claims 5 to 7 sandwiching the membrane electrode assembly (2) between them.

## Revendications

1. Plaque de pile à combustible (1) pour distribuer un réactif à une électrode ou à une couche de diffusion de gaz d'une pile à combustible, avec un corps de plaque (5) dans lequel est incorporé au moins un champ de flux (6) comprenant au moins un canal (7), dans laquelle le corps de plaque (5) présente des propriétés hygroscopiques et électriquement conductrices, **caractérisée en ce que** le corps de plaque (5) est formé de silicate de calcium, et **en ce que** du graphite est mélangé au silicate de calcium.

2. Plaque de pile à combustible (1) selon la revendication 1, **caractérisée en ce que** le corps de plaque (5) consiste en un matériau composite qui comprend au moins un matériau hygroscopique et au moins un matériau électriquement conducteur.

3. Plaque de pile à combustible (1) selon les revendications 1 ou 2, **caractérisée en ce que** le champ de flux (5) est muni, au moins partiellement, d'un revêtement électriquement conducteur (9) et imperméable au fluide réfrigérant.

4. Plaque de pile à combustible (1) selon l'une quelconque des revendications 1 à 3, **caractérisée en ce qu'**un élément de séparation (10) électriquement conducteur et imperméable au fluide réfrigérant est associé au champ de flux (6) qui est conçu pour retenir dans le champ de flux (6) un fluide réfrigérant circulant dans le champ de flux (6).

5. Plaque bipolaire (3) avec une plaque de pile à combustible (1) selon l'une quelconque des revendications 1 à 4, comprenant
un premier champ de flux (6) pour distribuer un premier réactif sur un premier côté de la plaque bipolaire (3),
un second champ de flux (6) pour distribuer un second réactif sur un second côté de la plaque bipolaire (3), et
un champ de flux de fluide réfrigérant (8) réalisé entre la plaque de pile à combustible (1) et une autre plaque unipolaire (13).

6. Plaque bipolaire (3) selon la revendication 5, **caractérisée en ce que** la plaque unipolaire (13) est constituée d'un métal ou de graphite.

7. Plaque bipolaire (3) selon la revendication 5, **caractérisée en ce que** la plaque unipolaire (13) est également constituée comme une plaque de pile à combustible (1) selon l'une quelconque des revendications 1 à 4.

8. Dispositif de pile à combustible (1) avec un ensemble d'électrodes à membrane (2) et avec deux plaques bipolaires (3) encadrant entre elles l'ensemble d'électrodes à membrane (2) selon l'une quelconque des revendications 5 à 7.
